Europäisches Patentamt

**European Patent Office**

**Office européen des brevets**

(19)

(11) Numéro de publication: **0 069 816**

**A1**

(12) **DEMANDE DE BREVET EUROPEEN**

(21) Numéro de dépôt: **81401122.7**

(22) Date de dépôt: **10.07.81**

(51) Int. Cl.³: **B 67 D 1/08**
B 67 D 1/04, F 16 L 37/00
F 16 L 37/28

(43) Date de publication de la demande:
**19.01.83 Bulletin 83/3**

(84) Etats contractants désignés:
**AT BE CH DE GB IT LI LU NL SE**

(71) Demandeur: **Dessenoix, Robert**
**11, rue des Chennevières**
**F-79600 AIRVAULT (Deux-Sèvres)(FR)**

(71) Demandeur: **Dessenoix, Pierre**
**2, route de Veluché**
**F-79600 AIRVAULT (Deux-Sèvres)(FR)**

(72) Inventeur: **Dessenoix, Robert**
**11, rue des Chennevières**
**F-79600 AIRVAULT (Deux-Sèvres)(FR)**

(72) Inventeur: **Dessenoix, Pierre**
**2, route de Veluché**
**F-79600 AIRVAULT (Deux-Sèvres)(FR)**

(74) Mandataire: **Chevallier, Robert**
**Cabinet BOETTCHER 23, rue La Boétie**
**F-75008 Paris(FR)**

(54) **Ensemble de tirage d'un liquide au moyen d'un gaz sous pression.**

(57) Une tête (2) comporte un tube coulissant (4) commandable par une came (15), et un anneau (22) délimitant, grâce à un joint (11), une chambre annulaire (26) étanche lorsque le tube (4) est relevé. Un tube plongeur (32) est entouré par un manchon (35) qui soulève le clapet (22) après que l'extrémité du tube (4) ait été mise en appui étanche sur un manchon flexible (38).

EP 0 069 816 A1

./...

Fig. 2

1

# Ensemble de tirage d'un liquide au moyen d'un gaz sous pression

L'invention concerne un ensemble de tirage d'un liquide au moyen d'un gaz sous pression.

On connaît, notamment par les brevets français N°S 1 508 333, 1 468 211 et 1 586 478 des têtes de tirage de liquide, tel que la bière, qui permettent simultanément la mise en pression gazeuse du récipient et le tirage du liquide. Des précautions sont prises pour éviter la détente du gaz en dehors du raccordement de la canalisation de liquide. Cependant ces dispositifs connus ne sont applicables qu'à des tubes plongeurs munis de robinets de fermeture dont l'ouverture est commandée par le raccordement de la tête de tirage. Ceci a pour inconvénient que les récipients de stockage doivent être munis de tubes plongeurs à mécanismes à ressort, nécessitant donc un entretien soigneux. En outre, ces dispositifs connus sont munis de ressorts, dont la rupture peut être cause de mauvais fonctionnement et peut nuire à la sûreté de leur utilisation.

Le but de l'invention est de proposer un ensemble de tirage perfectionné pouvant être raccordé à un tube plongeur non muni d'un robinet et excluant donc, de ce côté, tout incident mécanique pouvant affecter la sûreté de fonctionnement. Un autre but de l'invention est d'améliorer la sûreté de fonctionnement de la tête elle-même et de simplifier sa fabrication.

Ces buts sont atteints, selon l'invention, par un ensemble de tirage comportant une tête de tirage d'un liquide au moyen d'un gaz sous pression, destinée à être raccordée à un tube plongeur traversant de façon étanche la paroi d'un récipient de stockage dudit liquide, comportant un corps, dans lequel peut coulisser un tube central mobile dont l'extrémité inférieure peut venir se raccorder de façon étanche au tube plongeur par commande en descente par rapport au corps, ledit corps comportant une tubulure d'admission de gaz dans un espace annulaire ménagé entre le tube central mobile, le corps lui-même et un clapet annulaire inférieur disposé entre le corps et le tube central mobile, ledit clapet pouvant être soulevé par contact avec un élément de raccord au tube plongeur, grâce au fait que le clapet annulaire est monté coulissant entre le corps et le tube central mobile et est exposé à venir en contact positif avec l'élément de raccord approprié au tube plongeur.

De cette façon la pression de gaz si elle est appliquée dans la chambre annulaire, agit dans le sens de la fermeture du clapet aussi longtemps qu'il n'y a pas contact positif d'actionnement vers le haut, c'est-à-dire aussi longtemps que la tête n'est pas raccordée et que le tube central mobile n'est pas abaissé en contact d'étanchéité avec le tube plongeur. On supprime ainsi l'inconvénient des joints déformables et des incidents de fonctionnement qu'ils peuvent provoquer, notamment par vieillissement et fatigue.

Selon un mode de réalisation préféré, le clapet annulaire est monté coulissant entre le corps et le tube central contre la force du gaz et/ou d'un ressort s'appuyant sur le tube central mobile ou un organe déplaçable longitudinalement avec le tube central mobile. De cette façon, le clapet reste en position de fermeture, même si la pression de gaz n'est pas appliquée, mais, si le ressort casse, on a l'avantage, déjà mentionné, que la pression du gaz tendra aussitôt à fermer le clapet en cas de non-raccordement impeccable avec le tube plongeur. En outre ledit ressort est suffisant pour assurer le rappel du tube central mobile lorsqu'on le déverrouille de sa position de raccordement.

Il est avantageux, comme il est connu en soi, que la commande en descente du tube central mobile soit dirigée par une came hélicoïdale prévue sur le corps. De cette façon la manoeuvre est plus souple et moins dure.

Il est conforme à l'invention que l'extrémité supérieure du tube plongeur soit entourée par une pièce de raccord du corps portant une butée fixe de retenue axiale du clapet annulaire et que, dans l'intervalle annulaire entre le tube plongeur et la pièce étanche de raccord, se dresse un manchon flexible coopérant en relation d'étanchéité avec la face frontale du tube central mobile.

D'autres caractéristiques et avantages ressortiront de la description, qui sera donnée ci-après uniquement à titre d'exemple, d'un mode de réalisation de l'invention. On se reportera à cet effet aux dessins annexés, dans lesquels:

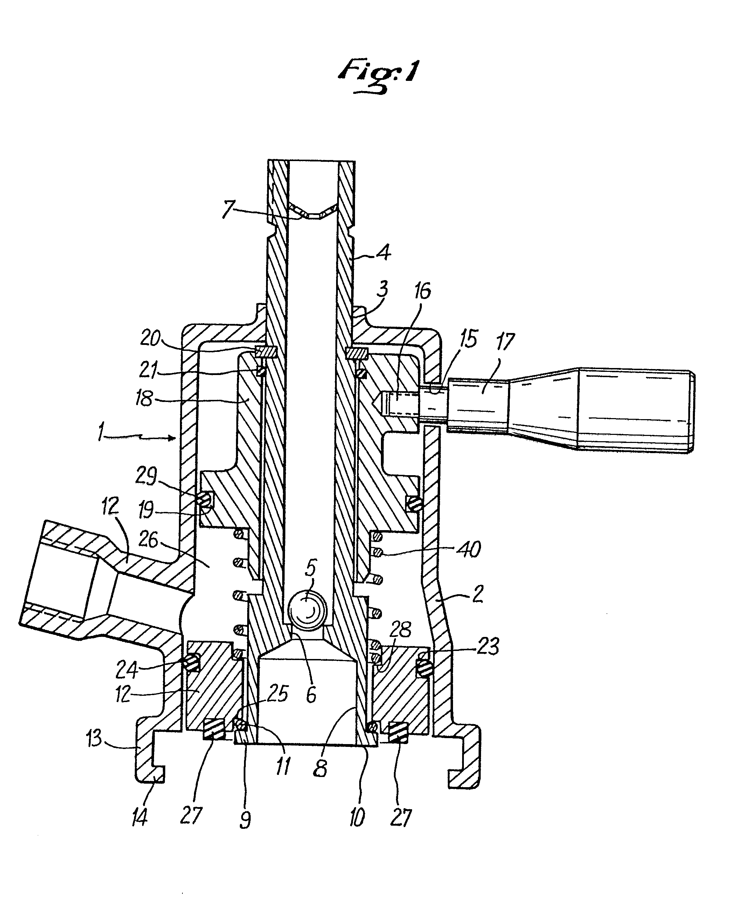

- la figure 1 est une vue en coupe axiale d'une tête de tirage de bière selon l'invention,

- la figure 2 est une vue en coupe axiale de la même tête de tirage en position de raccordement sur un tube plongeur installé sur un récipient et constituant un ensemble de tirage conforme à l'invention.

On décrira d'abord la tête de tirage proprement dite. La tête 1 comprend un corps 2 en forme générale de cloche partiellement cylindrique comportant un palier axial de coulissement 3 pour un tube central mobile 4 contenant une bille 5 formant clapet de retenue de bière sur un rétrécissement 6 constituant siège pour la bille. Une grille 7 d'arrêt supérieur de la bille est prévue. Le tube 4 se termine, à son extrémité inférieure 8, par un collet 9 servant, d'une part, de butée frontale 10 pour raccordement à un raccord de tube plongeur et, d'autre part, de portée pour un joint torique 11 emmanché sur le tube 4. Le corps 2 comprend un raccord 12 d'arrivée de gaz au voisinage de sa partie basse et une jupe 13 à baïonnette ou à rebord interne 14 encoché pour saisir une bride d'assemblage, comme il sera exposé. Le corps 2 comprend encore une rainure hélicoïdale 15 dans sa partie cylindrique supérieure pour guider la tige 16 d'une manette 17 de commande d'un piston 18 pouvant se déplacer de façon étanche dans la partie cylindrique du corps, grâce à un joint torique 29 disposé dans une gorge 19. Le piston 18 est lié au tube central mobile 4 par un anneau de liaison 20 complété par un joint torique 21. De cette façon, toute manoeuvre du levier 17 entraîne à volonté le tube central mobile 4, soit vers le haut, soit vers le bas, où il peut être verrouillé par un cran supérieur de la rainure hélicoïdale 15.

Sur la partie inférieure du tube central mobile 4 est monté, avec jeu, un anneau 22 comportant une gorge circulaire externe 23 pour un joint torique 24 d'étanchéité contre la paroi inférieure cylindrique du corps 2 dans sa partie inférieure en-dessous du niveau où débouche le raccord 12 d'arrivée de gaz. L'anneau 22 présente à sa partie interne basse un chanfrein circulaire interne 25 pouvant venir porter sur le joint torique d'étanchéité 11 retenu par le collet 9. L'anneau 22 porte à sa partie haute un autre chanfrein circulaire interne 28 pour servir de butée à un ressort 40 entourant le tube 4 et s'appuyant, d'autre part, sur le piston 18.

Par ce qui a été décrit jusqu'ici, on constate que, si on applique une pression de gaz dans le raccord 12, cette pression est appliquée à une chambre annulaire 26 délimitée par le tube central mobile 4, le corps 2 et l'anneau 22 qui constitue clapet portant sur le joint torique d'étanchéité 11. Grâce aux autres joints 29,24 et 21, la chambre annulaire 26 est parfaitement étanche quelle que soit la hauteur de réglage du tube central mobile dans les limites permises par la rampe hélicoïdale 15 qui correspondent sensiblement à la hauteur de la partie cylindrique du corps 2 sur laquelle porte le joint torique 24. L'anneau 22 porte, en outre, sur sa face frontale un joint annulaire 27 qui coopère avec le raccord 30 dont il va être parlé.

Pour recevoir la tête de tirage 1, on prévoit un raccord 30 en forme générale de manchon 35 vissable dans la paroi 31 d'un fût ou autre récipient pour un tube plongeur 32. Le raccord 30 présente à sa partie supérieure une bride 33 pouvant être épousée de façon étanche par la partie inférieure du corps 2 portant la jupe 13, et éventuellement encochée si la jupe 13 est à baïonnette. La base du manchon 35, du côté introductible dans le récipient, porte des évents périphériques 39 et porte un plateau 34 muni d'évents 41, traversé centralement par le tube plongeur 32 dont il est solidaire et qui s'élève sensiblement jusqu'à la bride 33. Du plateau 34, s'élève dans l'espace annulaire entre le manchon 35 et le tube 32, un manchon tronconique 36, à surface frontale supérieure plane 38, enserrant le tube 32 dans sa partie supérieure jusqu'à son bord supérieur qui comprend une série d'évents 37 prévus pour l'écoulement de la bière vers le haut. Le manchon tronconique 36 est en matériau relativement souple, par exemple une résine thermoplastique, pouvant fléchir de la position en trait interrompu 36' à la position en trait plein 36 sous une poussée mécanique, sans cependant perdre un contact étroit avec une pièce qui pousse vers le bas.

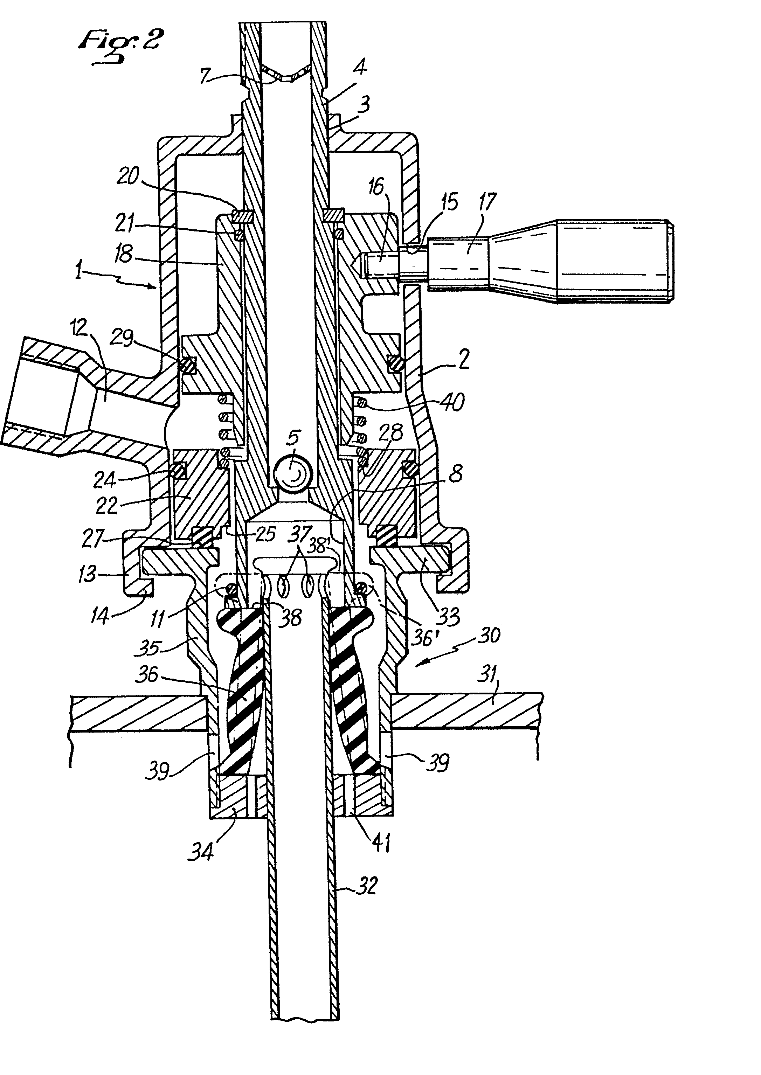

Pour raccorder la tête 1, on réunit le corps 2 et la bride 33, comme représenté à la figure 2, puis on abaisse, contre la force du ressort 40, le tube central mobile 4, dont la butée frontale 10 vient au contact du manchon 36, alors en position 36' et le joint annulaire 27 vient buter sur la bride 33. Dès que le contact est établi entre butée frontale 10 et manchon 38 (alors en 38') et entre joint annulaire 27 et bride 33, la continuité et l'étanchéité sont assurées entre le tube plongeur 32 et le tube central mobile 4 et entre le corps 2 et la bride 33. Si on continue à abaisser le tube central mobile 4, le manchon 36 fléchit, il dégage les évents 37, si bien que l'anneau 22 formant clapet pressé par le ressort 40 est retenu et est quitté par le joint annulaire 11 entraîné par le tube 4 qui descend. Dès cet instant le gaz, éventuellement introduit dans la chambre annulaire 26, trouve un passage libre entre l'anneau 22 et le tube 4 et la pression se transmet au récipient par l'intervalle annulaire entre les manchons 35 et 36 et les évents 39. On voit qu'aucune libération de gaz et qu'aucune projection externe de liquide ne sont possibles tant que les canalisations pour le gaz et pour le liquide ne sont pas en continuité rigoureusement étanche et que la bière, ou autre liquide, s'écoule avec sûreté chaque fois qu'on la tire au robinet.

Inversement, on voit qu'il est impossible de retirer la tête sans que l'arrivée de gaz et la sortie de liquide ne soient préalablement fermées.

<u>REVENDICATIONS</u>

1° - Ensemble de tirage comportant une tête de tirage d'un liquide au moyen d'un gaz sous pression, destinée à être raccordée à un tube plongeur traversant de façon étanche la paroi d'un récipient de stockage dudit liquide, comportant un corps, dans lequel peut coulisser un tube central mobile, dont l'extrémité inférieure peut venir se raccorder de façon étanche au tube plongeur par commande en descente par rapport au corps, ledit corps comportant une tubulure d'admission de gaz dans un espace annulaire ménagé entre le tube central mobile, le corps lui-même et un clapet annulaire inférieur disposé entre le corps et le tube central mobile, ledit clapet pouvant être soulevé par contact avec un élément de raccord au tube plongeur, caractérisé en ce que le clapet annulaire (22) est monté coulissant entre le corps (2) et le tube central mobile (4) et est exposé à venir en contact positif avec l'élément de raccord approprié (33) au tube plongeur (32).

2° - Tête de tirage selon la revendication 1, caractérisée en ce que le clapet annulaire (22) est monté coulissant entre le corps (2) et le tube central (4) contre la force du gaz et/ou d'un ressort (40) s'appuyant sur le tube central mobile (4) ou un organe (18) déplaçable longitudinalement avec le tube central mobile (4).

3° - Tête de tirage selon la revendication 1, caractérisée en ce que la commande en descente du tube central mobile (4) est dirigée par une came hélicoïdale (15) prévue sur le corps (2).

4° - Ensemble de tirage selon la revendication 1, caractérisé en ce que l'extrémité supérieure du tube plongeur (32) est entourée par une pièce étanche (30) de raccord du corps (2) portant une butée fixe (33) de retenue axiale du clapet annulaire (22) et, dans l'intervalle annulaire entre le tube plongeur (32) et la pièce de raccord (30) se dresse un manchon flexible (36) coopérant en re- lation d'étanchéité avec la face frontale (9) du tube central mobile (4).

*Fig.1*

Fig.2

# RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| DY | FR - A - 1 586 478 (ALUMASC) | | B 67 D 1/08 1/04 |
| | * Page 2, ligne 32 - page 3, ligne 18; figures 1,2,5 * | 1 | F 16 L 37/00 37/28 |
| A | | 4 | |
| | -- | | |
| Y | US - A - 3 211 178 (AEROQUIP) | | |
| | * Colonne 5, lignes 5-43; figures 5,6 * | 1 | |
| A | | 2 | |
| | ---- | | |

### DOMAINES TECHNIQUES RECHERCHES (Int. Cl. 3)

B 67 D
B 67 C
F 16 L

### CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-03-1982 | VROMMAN |

OEB Form 1503.1 06.78